# EUROPÄISCHE PATENTANMELDUNG

(11) **EP 2 422 953 A2**
(43) Veröffentlichungstag der Anmeldung: **29.02.2012**
(21) Anmeldenummer: 11174710.1
(22) Anmeldetag: 20.07.2011
(51) Int. Cl.: B29C 49/42, B29C 49/48, B29C 49/56

(54) **Blasform**

(30) Priorität: 26.08.2010 DE 102010039802
(71) Anmelder: Krones AG, 93073 Neutraubling (DE)
(72) Erfinder: Höllriegl, Thomas, 93158 Teublitz (DE); Albrecht, Thomas, 92339 Beilngries (DE); Führer, Kaj, 93105 Tegernheim (DE)
(74) Vertreter: Grünecker, Kinkeldey, Stockmair & Schwanhäusser

(57) **Zusammenfassung**

In einer Blasform (F) zum Herstellen blas- oder streckblasgeformter Behälter, mit durch einen kraftübertragenden Betätigungsmechanismus (M) relativ zueinander beweglichen Formträgerteilen (T1, T2) zum Öffnen, Schließen und Verriegeln von einen Formhohlraum definierenden, an den Formträgerteilen (T1, T2) montierten Formteilen (21) ist jeder Formträgerteil (T1, T2) ein einstückiger Verbundbauteil mit Bereichen aus unterschiedlichen Materialien (X, Y), wobei zumindest ein erster Bereich aus einem Material (X) im Formträgerteil (T1, T2) überwiegend ein Kraftübertragungselement und zumindest ein zweiter Bereich aus einem anderen Material (Y) überwiegend ein Füll- oder Umhüll- oder Abstandshalter-Element sind.

## Beschreibung

Die Erfindung betrifft eine Blasform gemäß Oberbegriff des Patentanspruchs 1.

Für Blasformen, insbesondere zum Blasen oder Streckblasen von Behältern aus Kunststoff, wie z. B. Getränkeflaschen, hat sich ein Bauprinzip durchgesetzt, bei dem die Formträgerteile, an welchen die Formteile montiert sind, aktiv die durch den Betätigungsmechanismus gesteuerten Manipulationen der Blasform ausführen, während die Formteile passiv bleiben. Die Formteile sind nur beim Formvorgang aktiv, während welchem die Formträgerteile die Verriegelungsfunktion der Blasform erfüllen und Kräfte aufnehmen und übertragen. Für die Manipulationen der Blasform sind bestimmte bauliche Merkmale an den Formträgerteilen erforderlich, mit denen Kräfte ein- oder abgeleitet oder aufgenommen werden, und für die die Formträgerteile eine relativ aufwändige Formvielfalt benötigen. Die Formträgerteile der Blasformen, beispielsweise einer Streckblasmaschine, werden bisher aus einer einzigen Materialsorte hergestellt, z. B. als Stahlguss- oder Aluminiumguss-Formteile. Das eingesetzte Material ist homogen mit meist gleichbleibender Dichte und Werkstoffstruktur. Daraus ergibt sich ein Kompromiss zwischen der Festigkeit und dem Gewicht, weil beispielsweise Stahl bei höherer Festigkeit höheres Gewicht bedingt, während Aluminium bei geringerem Gewicht geringere Festigkeit hat. Dabei ist zu berücksichtigen, dass kurze Zykluszeiten und hohe Blasdrücke mit schnellen Bewegungen und hohen Kräften verbunden sind, so dass ein Kompromiss zwischen der Festigkeit und dem Gewicht der Formträgerteile einen unerwünschten Nachteil bedeutet.

Bei einer aus US 2010/0047375 A1 bekannten Blasform sind die Formträgerteile, in welchen die Formteile, ausgenommen ein Bodenformteil, montiert sind, außenseitig mit einer aufwändigen Versteifungsrippen-Struktur gestaltet, und ist in einem mittleren Höhenbereich jedes Formträgerteils außenseitig ein Ringsegment mit konischer Außenfläche fixiert, über das bei geschlossener Blasform zur Verriegelung ein umfänglich geschlossener Kragen mit konischer Innenfläche axial aufgeschoben wird. Materialspezifikationen der Formträgerteile werden nicht offenbart.

Bei einer aus EP 1 995 038 A bekannten Blasform sind die Formträgerteile außenseitig mit voneinander beabstandeten, zur Schwenkachse der relativ zueinander auf- und zuklappbaren Formträgerteile senkrechte Verstärkungsrippen angeformt, die mit Komponenten des Betätigungsmechanismus zusammenwirken. Die Verstärkungsrippen sind angeschweißt oder einstückig mit den Formträgerteilen ausgebildet und enthalten zum Beispiel Lagerungsaugen für eine Schwenkachse. Es werden keine Materialspezifikationen für die Formträgerteile offenbart.

Es ist allerdings allgemein bekannt, bei Formwerkzeugen in den den Formhohlraum definierenden Formteilen hochbelastete Oberflächenbereiche z. B. in der Formtrennebene oder an einem Bodenformteil mit verstärkenden Materialien zu armieren, jedoch nicht gegebenenfalls vorgesehene Formträgerteile z.

Der Erfindung liegt die Aufgabe zugrunde, eine Blasform der eingangs genannten Art zu schaffen, deren Formträgerteile ohne Kompromiss zwischen Festigkeit und Gewicht mit reduziertem Gewicht, jedoch belastungsorientiert ausgebildet sind.

Die gestellte Aufgabe wird mit den Merkmalen des Patentanspruchs 1 gelöst.

Indem jeder Formträgerteil einstückig als Verbundbauteil mit Bereichen aus unterschiedlichen Materialien hergestellt ist, wobei zumindest ein erster Bereich aus einem Material überwiegend ein Kraftübertragungselement bildet, während zumindest ein zweiter Bereich aus einem anderen Material überwiegend ein Füll- oder Umhüll- oder Abstandshalter-Element bildet, lassen sich für das Kraftübertragungselement Materialien mit hoher Festigkeit dort einsetzen, wo sie für die Kräfte optimal platziert sind, während der zumindest eine zweite Bereich aus einem anderen Material im Formträgerteil andere Funktionen erfüllt, wobei das andere Material beispielsweise gut formbar und leichter ist und den Verbund mit dem ersten Bereich herstellt. Bei geringerem Gesamtgewicht des Formträgerteils wird optimale und gezielte belastungsorientierte Festigkeit gegen hohen Blasdruck erzielt. Schnelle Bewegungen sind ohne Einbußen möglich. Als sekundärer Vorteil ergibt sich eine kompakte Bauweise der belastungs- und gewichtsoptimierten Formträgerteile, was in Blasmaschinen mit einer großen Anzahl dicht beieinander angeordneter Blasformen auch zum Beispiel wegen einfacher Betätigungsmechanismen wünschenswert ist.

Bei einer zweckmäßigen Ausführungsform sind in den Bereichen zumindest die Dichten und/oder Festigkeiten und/oder spezifischen Gewichte der verwendeten Materialien unterschiedlich. Diese Materialspezifikationen werden im gegenseitigen Verbund im Formträgerteil gezielt an strategisch entscheidenden Bereichen vorgesehen, um bei reduziertem Gewicht optimale Funktionalität sicherzustellen.

Zweckmäßig werden die im Verbund eingesetzten Materialien aus einer Gruppe ausgewählt, die zumindest umfasst: Leichtmetall-Gussmaterial, Leichtmetall, auch Leichtmetalllegierungen, Stahl-Gussmaterial, Stahl, auch Stahllegierungen, mit Kohlenstofffasern und/oder Glasfasern verstärktes Kunststoffmaterial, unverstärkten Kunststoff oder Keramik. Speziell Leichtmetall oder Leichtmetallgussmaterial, verstärktes Kunststoffmaterial, unverstärkter Kunststoff und Keramik zeichnen sich durch geringes spezifisches Gewicht aus, während Stahl-Gussmaterial und Stahl bei gezieltem belastungsorientiertem Einsatz nur lokal höheres spezifisches Gewicht bei hoher Festigkeit hat. Mit Kohlenstofffasern verstärktes Kunststoffmaterial oder Keramik erbringt sogar bei geringem spezifischem Gewicht hohe Festigkeit. Diese stofflichen Zusammenhänge werden in dem Formträgerteil zur Gewichts- und Festigkeitsoptimierung gezielt miteinander kombiniert.

Bei einer zweckmäßigen Ausführungsform sind die Bereiche des einstückigen Verbundbauteils durch Eingießen und/oder Kleben und/oder Verschrauben und/oder Verschweißen und/oder Verpressen und/oder Formschluss und/oder Kraftschluss und/oder Spritzgießen und/oder Einbacken und/oder Umwickeln miteinander verbunden.

Bei einer zweckmäßigen Ausführungsform eines, vorzugsweise, als Gießformteil hergestellten, Formträgerteils ist wenigstens ein Bereich aus einem Material mit hoher Festigkeit als innere Verstärkung zumindest bereichsweise innen in wenigstens einem die Form des Formträgerteils außen abbildenden äußeren Bereich mit geringerer Festigkeit angeordnet, analog zum Konzept bei modernen Motorblöcken für Verbrennungsmotoren, wobei der innenliegende Bereich aus Material höherer Festigkeit die Gesamtstruktur verstärkt, während der äußere Bereich, der geringere Festigkeit und/oder geringeres spezifisches Gewicht oder geringere Dichte besitzt, leichter die Form abbilden kann und Gewicht einspart. So können beispielsweise bei einem Gießverfahren kleinere Strukturen und Radien geformt oder bei spanabhebender Bearbeitung einfacher bearbeitet werden. Der innenliegende Bereich ermöglicht die Aufnahme höherer Kräfte (Druck/Zug/Torsion) an spezifischen hochbelasteten Stellen, z. B. in Lagerungsaugen, oder wo Anbau- oder Einbauteile oder eingesetzt werden oder aufliegende Bauteile angreifen. Dabei muss der innere Bereich nicht vollständig durch den äußeren Bereich umschlossen sein, sondern der innere Bereich kann an bestimmten Oberflächenabschnitten freiliegen, nämlich zum Beispiel dort, wo ein Kraft- oder Formschluss bei der Manipulation der Blasform erforderlich ist. Das für den äußeren Bereich eingesetzte Material ist beispielsweise ein Aluminium-Sphäroguss, während das Material für den inneren Bereich verschiedene Graugusssorten, mit Kohlenstofffasern verstärktes Kunststoffmaterial, Keramik oder sogar gegebenenfalls mit Glasfasern verstärkte Kunststoffelemente aufweisen kann. Besonders zweckmäßig ist jedoch der innere Bereich ein Inlay, das zumindest bereichsweise durch das äußere Gussteil umschlossen ist. Alternativ kann das Konzept mit den unterschiedlichen Materialien umgekehrt realisiert werden, indem wenigstens ein Bereich aus einem Material mit hoher Festigkeit die Form des Formträgerteils abbildet, und eine äußere Verstärkung um wenigstens einen inneren Füll-Bereich aus Materialien mit geringerer Festigkeit und/oder Dichte und/oder spezifischem Gewicht bildet. Hierbei bildet, insbesondere bei nach einem Gießverfahren hergestelltem Formträgerteil, zum Beispiel der innere Bereich ein leichteres Inlay in dem äußeren Gussteil aus dem Material mit höherer Festigkeit.

Bei einer zweckmäßigen Ausführungsform eines nach einem Gießverfahren hergestellten Formträgerteils ist der jeweils innenliegende Bereich als vorgefertigtes oder gegossenes Inlay ausgebildet, und wird der jeweils äußere Bereich um das Inlay vergossen. Bei dem Gießverfahren ergibt sich der erforderliche, innige Verbund zwischen den Bereichen, gegebenenfalls unterstützt durch einen bei dem Gießverfahren bewusst angestrebten Formschluss oder eine bewusst angestrebte gegenseitige Verzahnung zwischen den Bereichen.

Um bei einem nach einem Gießverfahren hergestellten Formträgerteil den Form- und Kraftschluss bzw. die Verzahnung zu erzielen, kann es zweckmäßig sein, entweder im inneren Bereich oder im äußeren Bereich Durchbrüche und/oder Hohlräume vorzusehen, in die das jeweils andere Material eindringt.

Bei einer alternativen Ausführungsform sind im Formträgerteil die Bereiche in einem Schicht- und/oder Laminat- und/oder Sandwichaufbau angeordnet, wobei für den Verbund der Schichten wahlweise eine oder mehrere Verbindungsweisen, wie oben erwähnt, eingesetzt werden.

Bei einem zweckmäßigen Ausführungsbeispiel mit einem Schicht- und/oder Laminat- und/oder Sandwichaufbau unter zumindest teilweiser Verwendung von faserverstärkten, insbesondere mit Kohlenstofffasern verstärkten, Kunststoffmaterialien, werden gleiche oder variierende Schichtstärken und/oder gleiche oder variierende Faserorientierungen unter den Schichten vorgesehen, und zwar im Hinblick auf die belastungsoptimierte und gewichtsoptimierte Gestaltung des Formträgerteils.

Bei einer zweckmäßigen Ausführungsform sind zumindest im Bereich aus einem Material hoher Festigkeit Kraftübertragungs- oder Krafteinleitungs-Merkmale vorgesehen, z. B. eingeformt oder angeformt, wie ein Lagerungsauge, gegebenenfalls mit einer Armierungsbuchse, eine Anschlagfläche, ein Anbau- und/oder Einsatzteil, oder dergleichen, wobei, zweckmäßig, das Kraftübertragungs- und/oder Krafteinleitungs-Merkmal im Formträgerteil von außen für den Betätigungsmechanismus zugänglich platziert sein kann.

Bei einer konkreteren Ausführungsform ist der Formträgerteil eine gekrümmte Verbundschale, die eine innenseitige Begrenzung zur Montage des Formteils, eine außenseitige Begrenzung, gegebenenfalls mit Kraftübertragungs- oder Krafteinleitungs-Merkmalen, obere und untere, die Krümmung der Verbundschale abbildenden Endflächen, und beiderseits die Endflächen verbindenden Begrenzungsränder aufweist, wobei an den Begrenzungsrändern miteinander fluchtende, voneinander durch Zwischenräume separierte Widerlager, vorzugsweise in Form von gebohrten oder vorgeformten Lagerungsaugen, gegebenenfalls mit Armierungsbuchsen aus Metall, vorgesehen sind, wobei diese Widerlager und die Kraftübertragungs- oder Krafteinleitungs-Merkmale in den zumindest einem das Kraftübertragungselement bildenden Bereich des Formträgerteils angeordnet sind.

Zusätzlich kann in diesem einstückigen Verbundbauteil in der inneren Begrenzung der Verbundschale, die, vorzugsweise, zur schwimmenden Lagerung eines Formteils ausgebildet ist, wenigstens eine Vertiefung zum Einbringen eines Kompensationselements vorgesehen sein. Das Kompensationselement wird beispielsweise hydraulisch dann beaufschlagt, wenn die Blasform geschlossen und verriegelt ist, um die Formteile in der Formtrennebene zusätzlich aneinander zu pressen und das Abbilden der Formtrennebene am Behälter zu vermeiden oder zu minimieren.

Bei einer zweckmäßigen Ausführungsform weist der Formträgerteil mehrere zueinander im Wesentlichen parallele, beabstandete Verstärkungsbügel auf, die über eine Formteil-Montierschale miteinander zu dem Verbundbauteil verbunden sind. Jeder Verstärkungsbügel weist in einem außenliegenden Umhüllbereich aus einem Material mit geringer Festigkeit und/oder Dichte und/oder spezifischem Gewicht wenigstens ein eingebettetes versteifendes bügelförmiges Inlay, zweckmäßig mit eingeformten Widerlagern, aus wenigstens einem Material mit hoher Festigkeit und/oder Dichte und/oder spezifischem Gewicht auf, wobei die Widerlager, falls vorhanden, in dem Umhüllbereich freigelegt sind, damit der Betätigungsmechanismus dort anzugreifen vermag, ohne den Hüllbereich nennenswert zu belasten. Die Verstärkungsbügel bringen in strategisch wichtigen Bereichen die notwendige Festigkeit, während die Umhüllung und die Formteil-Montierschale zusätzliche Funktionen erfüllen, aber aufgrund der Materialauswahl das Gesamtgewicht des Formträgerteils verringern lassen.

Bei einer anderen zweckmäßigen Ausführungsform weist der den Formträgerteil bildende Verbundbauteil mehrere, im Wesentlichen zueinander parallele, beabstandete Verstärkungsbügel auf, die über Abstandshalter aus wenigstens einem Material mit geringer Festigkeit und/oder Dichte und/oder spezifischem Gewicht miteinander verbunden sind. Dabei weist jeder Verstärkungsbügel eine umlaufende, beispielsweise eine Armierungsbuchse fixierende Außenwand aus einem Material mit hoher Festigkeit und innen eine Füllung, vorzugsweise als Teil des oder der Abstandshalter, aus wenigstens einem Material mit geringer Festigkeit und/oder Dichte und/oder spezifischem Gewicht auf. Die Außenwand besteht dabei zweckmäßig aus kohlenstofffasernverstärktem Kunststoffmaterial oder Stahl, während die Füllung aus faserverstärktem Kunststoff oder spritzgegossenem duroplastischem oder thermoplastischem Kunststoff geformt sein kann. Bei einer alternativen Ausführungsform weist jeder Verstärkungsbügel die Außenwand aus einem Stahl und/oder aus kohlenstofffasernverstärktem Kunststoffmaterial auf, wobei innerhalb der Außenwand ein Laminat aus Materialien mit geringer Festigkeit und/oder Dichte und/oder spezifischem Gewicht vorgesehen ist, vorzugsweise ein Laminat aus Kunststoffschichten, vorzugsweise spritzgegossenen duroplastischen oder thermoplastischen Schichten und/oder aus glasfaserverstärktem Kunststoffmaterial oder sogar etwa weniger hochwertigem kohlenstofffasernverstärktem Kunststoffmaterial.

Bei einer weiteren Ausführungsform weisen die Abstandshalter, vorzugsweise in Form einer durch alle Verstärkungsbügel durchgehenden Struktur, aus wenigstens einem Material geringer Festigkeit und/oder Dichte und/oder spezifischem Gewicht flächig aufeinander geschichteten Lagen gleicher oder ungleicher Dicken auf, die stoffschlüssig oder formschlüssig und kraft-schlüssig miteinander verbunden sind.

In diesem Fall können die Lagen aus faserverstärktem Kunststoffmaterial oder sogar kohlenstofffasernverstärktem Kunststoffmaterial, d. h. in einer Kunststoffmatrix eingebetteten Fasern, bestehen, wobei in zumindest einigen Lagen verschiedene Faserorientierungen vorgesehen werden können. Hierbei können in beispielsweise Lagen aus untereinander gleichen Fasergeweben die Faserorientierungen in zumindest einigen Lagen relativ zueinander verdreht oder versetzt gewählt werden, oder werden die Lagen aus Fasergeweben gebildet, in denen beispielsweise Schuss- und Kettfasern oder -fäden zueinander unter variierenden Winkeln verlaufen. Dieser Schichtaufbau erbringt bei geringem Gewicht relativ hohe Festigkeit und ermöglicht eine belastungsorientierte Gestaltung beispielsweise über die Lagen-Dicken und/oder die Faserorientierungen.

Bei einer alternativen Ausführungsform werden für den Schichtaufbau Lagen aus Leichtmetall-Blechen geschnitten oder gestanzt und miteinander verschweißt oder verschraubt, um im Verbund mit den Verstärkungsbügeln das Gesamtgewicht des Formträger zu reduzieren und.

Bei einer weiteren, besonders zweckmäßigen Ausführungsform weist der Formträgerteil bzw. dessen Verbundschale einen Kern aus einem Material mit geringer Festigkeit und/oder Dichte und/oder spezifischem Gewicht, vorzugsweise aus faserverstärktem Kunststoff oder einem Metall, wie einem Leichtmetall oder einer Leichtmetalllegierung, beispielsweise als Gussteil, auf, und ist dieser Kern mit mit Kohlenstofffasern verstärktem Kunststoffgewebe umwickelt und stoffschlüssig damit verbunden. Diese wickeltechnisch realisierte Ausbildung ist in gewisser Weise analog zur gusstechnischen Ausbildung mit einem gewichteinsparenden Inlay. Ausführungsformen des Erfindungsgegenstandes werden anhand der Zeichnung erläutert. Es zeigen:
- Fig. 1: zwei zu einer Blasform gehörige Formträgerteile in Perspektivdarstellung,
- Fig. 2: eine andere Ausführungsform eines Formträgerteils, analog zu dem in Fig. 1 rechts gezeigten Formträgerteil,
- Fig. 3: den Formträgerteil von Fig. 2 in teilweise geschnittener Perspektivdarstellung zur Verdeutlichung des Innenaufbaus,
- Fig. 4: ein aus dem Formträgerteil von Fig. 3 herausgelöst gezeigtes Inlay,
- Fig. 5: einen Teil eines Formträgerteils einer anderen Ausführungsform, in Perspektivdarstellung,
- Fig. 6: ein herausgelöstes Details, in Perspektivdarstellung, von Fig. 5,
- Fig. 7: eine andere Ausführungsform eines Formträgerteils, in Perspektivdarstellung,
- Fig. 8: eine andere Ausführungsform eines Formträgerteils, in Perspektivdarstellung, und
- Fig. 9: eine weitere Ausführungsform eines Formträgerteils, in Perspektivdarstellung.

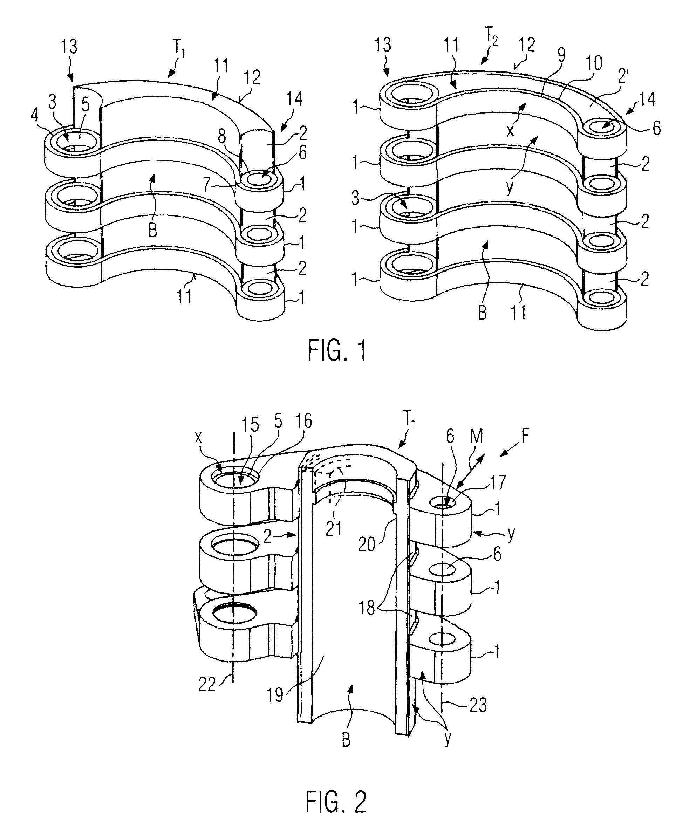

Fig. 1 zeigt zwei zusammengehörige Formträgerteile T1, T2 einer anhand Fig. 2 erläuterten Blasform, insbesondere zum Blasen oder Streckblasen von Behältern wie Kunststoff-Getränkeflaschen, in einer nicht gezeigten Blasmaschine. Die beiden Formträgerteile T1, T2 in Fig. 1 sind einstückige Verbundbauteile jeweils in Form einer gekrümmten Verbundschale mit mehreren im Wesentlichen zueinander parallelen und beabstandeten Verstärkungsbügeln 1, die über Abstandshalter 2 miteinander verbunden sind. Die Abstandshalter 2 können einen durch die Verstärkungsbügel durchgehenden Abstandshalter bilden oder beispielsweise stoffschlüssig oder auf andere Weise miteinander verbunden sein.

Jeder Verstärkungsbügel 1 weist an einem Ende an einem Rand 13 der Verbundschale ein Widerlager 3 beispielsweise in Form einer Bohrung 4, ausgekleidet mit einer metallischen Armierungsbuchse 5 auf, sowie gegebenenfalls ein weiteres Widerlager 6 in Form einer Bohrung 7, ausgekleidet mit einer metallischen Armierungsbuchse 8 am anderen Rand 14 der Verbundschale. Der Verstärkungsbügel 1 wird von wenigstens einer Außenwand 9 dominiert, die die Form des Verstärkungsbügels und der Verbundschale abbildet und in dem Formträgerteil T1, T2 als überwiegendes Kraftübertragungselement einen Bereich aus einem Material X mit zumindest hoher Festigkeit klarstellt, beispielsweise aus Stahl oder aus einem mit Kohlenstofffasern verstärkten Kunststoffmaterial. Der von der Außenwand 9 umschlossene Innenraum 10, ausgenommen die Armierungsbuchsen 5, 8, wird durch den Abstandshalter 2 ausgefüllt, der aus einem Material Y mit geringer Festigkeit und/oder Dichte und/oder spezifischem Gewicht hergestellt ist, um das Gesamtgewicht des Formträgerteils T1, T2 zu verringern. Die Verbundschale besitzt obere und untere, die Krümmung der Verbundschale abbildende Endflächen 11, die über die Ränder 13, 14 verbunden sind. Die konkave Innenseite der Verbundschale bildet eine Begrenzung B, die, nicht gezeigt, zur Montage eines den Formhohlraum der Blasform definierenden Formteils (Fig. 2) ausgebildet ist. Ferner hat die Verbundschale eine konvexe äußere Begrenzung 12, an der, nicht gezeigt, zumindest an einem Verstärkungsbügel 1 Anbau- oder Einsetzteile oder Anschlagflächen angeordnet sein können. Diese Teile können zur Krafteinleitung oder Kraftübertragung bei der Manipulation an dem Formträgerteil T1, T2 bzw. der Blasform dienen, wie auch die Widerlager 3, 6.

Die Widerlager 3 dienen beispielsweise dazu, die beiden Formträgerteile T1, T2 (in um 180° nach vorne aus der Zeichnungsebene gedrehter Lage des Formträgerteils T1) mittels einer eingesteckten, die Schwenkachse definierenden, Welle relativ zueinander schwenkbar zu koppeln. Die Widerlager 6 dienen hingegen beispielsweise zum Verriegeln der zueinander geschwenkten Formträgerteile T1, T2 durch ein eingeschobenes Verriegelungselement oder angreifende Verriegelungsbauteile. Mit den erwähnten, nicht gezeigten Anbau- oder Einsetzteilen, zweckmäßig an den Verstärkungsbügeln 1, können die Formträgerteile T1, T2 zum Öffnen und Schließen der Blasform manipuliert werden, oder in der Blasstation mit damit zusammenwirkenden Komponenten arbeiten. Das Material X mit hoher Festigkeit kann eine höhere Dichte und/oder ein höheres spezifisches Gewicht als das Material Y haben, kann in diesem Bereich die höhere Festigkeit jedoch auch, z. B. bei Verwendung mit Kohlenstofffasern verstärkten Kunststoffmaterials hohe Festigkeit bei geringem spezifischem Gewicht erbringen.

Die Abstandshalter 2 können beispielsweise aus faserverstärktem Kunststoff, z. B. glasfaserverstärktem Kunststoff, bestehen oder aus Leichtmetall oder einer Leichtmetalllegierung. Die Außenwand 9 der Verstärkungsbügel 1 könnte auch ein Keramikbauteil mit hoher Festigkeit (hochfeste Keramik) bei relativ geringem Gewicht sein. Die Abstandshalter 2 könnten miteinander verklebt oder verschraubt sein.

Fig. 2 zeigt eine andere Ausführungsform des Formträgerteils T1 in Form beispielsweise eines gusstechnisch hergestellten, einstückigen Verbundbauteils. Ferner verdeutlicht Fig. 2 die Anordnung einer Welle 29, die die Schwenkachse der Formträgerteile T1, T2 in der Blasform F darstellt, sowie einen eingesetzten Verriegelungsstift 23 zur Verriegelung der Blasform, wobei ein durch einen Doppelpfeil angedeuteter, kraftübertragender Betätigungsmechanismus M zum Handhaben der Blasform F beispielsweise an mindestens einem der Verstärkungsbügel 1 angreift.

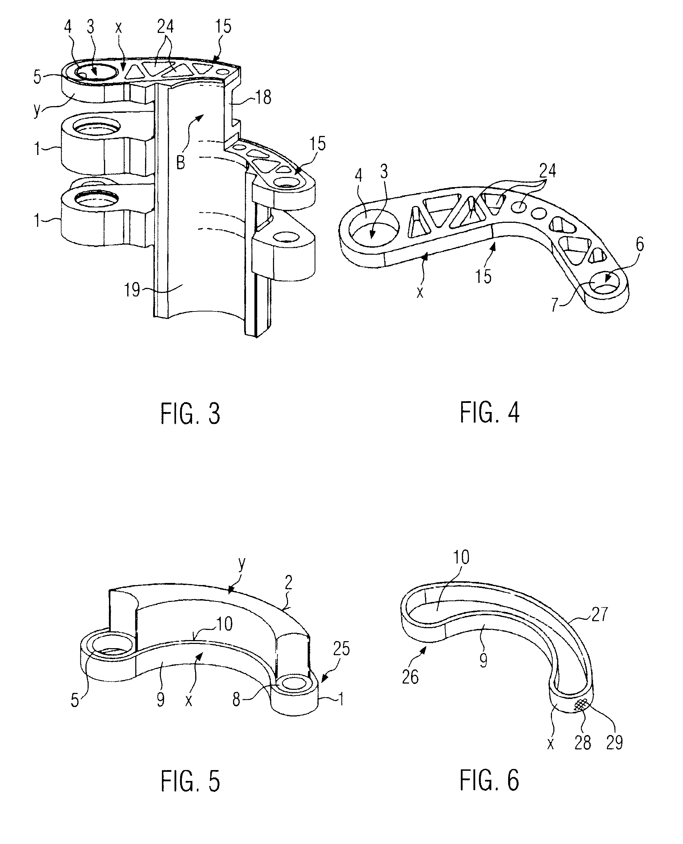

Die in Fig. 2 gezeigte Ausführungsform des Formträgerteils T1 wird gusstechnisch gefertigt, indem in jedem Verstärkungsbügel 1 ein Inlay 15 aus einem Material X hoher Festigkeit, beispielsweise als vorgefertigter Teil oder vorgefertigter Gussteil, in eine Umhüllung aus einem Material Y mit geringer Festigkeit und/oder Dichte und/oder spezifischem Gewicht eingegossen und stoffschlüssig damit verbunden ist. In jedem Verstärkungsbügel 1 kann mindestens ein Inlay 15 enthalten sein, wobei, zweckmäßig, durch Bohrungen 16, 17 in der Umhüllung Zugang zu den Armierungsbuchsen 5, 6 geschaffen ist. Mit den Umhüllungen aus dem Material Y ist eine Formteil-Montierschale 19, zweckmäßig ebenfalls aus einem Material Y mit geringer Festigkeit und/oder Dichte und/oder spezifischem Gewicht einstückig verbunden, die die Funktion des Abstandshalters 2 von Fig. 1 übernimmt und die Verstärkungsbügel 1 relativ zueinander positioniert und miteinander verbindet. Die Formteil-Montierschale 19 bildet die innere Begrenzung B der Verbundschale des Formträgers T1, in der, gestrichelt angedeutet, beispielsweise ein eine Hälfte des Formhohlraums der Blasform F definierender Formteil 21 montiert ist. Der Formteil 21 kann fest montiert sein, oder schwimmend gelagert werden. Im letztgenannten Fall kann in eine in der Formteil-Montierschale 19 eingeformte Vertiefung 20 ein nicht gezeigtes Kompensationselement eingebracht werden. Die Formteil-Montierschale 19 ist so in die Verstärkungsbügel 1 integriert, dass sie (wie anhand Fig. 3 verdeutlicht) die Verstärkungsbügel 1 über Stege 18 fest miteinander verbindet.

In Fig. 3 ist zur Verdeutlichung des Innenaufbaus des Formträgerteils T1 von Fig. 2 ein oberer Teil des obersten Verstärkungsbügels 1 und ein rechtseitiger Teil der Verbundschale weggeschnitten. Das Inlay 15, das aus dem Material X mit hoher Festigkeit besteht, kann gusstechnisch oder spanabhebend vorgefertigt und dann in die Umhüllung eingegossen sein. Alternativ kann das Inlay ein Formteil aus mit Kohlenstofffasern verstärktem Kunststoffmaterial sein, das gebacken und als Inlay beim Gießen des Formträgerteils T1 eingelegt wird. Selbst ein vorgefertigtes Inlay aus keramischem Material, zweckmäßig hochfester Keramik, kann zur Verstärkung verwendet werden. Um den Verbund zwischen der Umhüllung aus dem Material Y und dem Inlay 15 aus dem Material X zu verbessern, können im Inlay 15 Durchbrüche oder Hohlräume 24 geformt sein, in welche das Material der Umhüllung eindringt und sich verzahnt. Die Widerlager 3, 6 können beispielsweise in Form von Bohrungen 4, 7 im Inlay 15 vorbereitet sein und werden dann beispielsweise mit Armierungsbuchsen 5 ausgekleidet. Die Formteil-Montierschale 19 ist mit den Umhüllungen der Verstärkungsbügel 1 einstückig.

In den Fig. 2 und 3 bildet das Inlay 15 in jedem Verstärkungsbügel 1 ein Kraftübertragungs- oder Krafteinleitungselement und eine Verstärkung, während die Umhüllung aus dem Material Y die äußere Form des Formträgerteils T1 im Detail abbildet. Fig. 4 verdeutlicht das herausgelöste Inlay 15 aus dem Material X zumindest mit hoher Festigkeit und den Widerlagern 3, 6 sowie den Durchbrüchen oder Ausnehmungen 24.

Alternativ könnte das anhand der Fig. 2 bis 4 erläuterte Konzept auch umgekehrt realisiert werden, d. h., dass die Umhüllung zumindest der Verstärkungsbügel 1, und gegebenenfalls auch die Formteil-Montierschale 19, aus einem Material X mit hoher Festigkeit gusstechnisch hergestellt sind, und das jeweilige Inlay 15 aus einem Material Y mit geringer Festigkeit und/oder Dichte und/oder spezifischem Gewicht vorgefertigt und als Distanzhalter oder Füllelement in die Umhüllung eingegossen ist, so dass das Material X mit hoher Festigkeit gusstechnisch die Au-βenform des Formträgerteils T1 abbildet, während die Inlays 15 aus dem Material Y mit zumindest geringer Festigkeit und/oder Dichte und/oder spezifischem Gewicht Füllelemente bilden, die die Krafteinleitungs- oder Kraftübertragungsfunktion des Verstärkungsbügels 1 unterstützen, aber das Gesamtgewicht des Formträgerteils T1 verringern.

Fig. 5 verdeutlicht eine Komponente beispielsweise zum Herstellen der Ausführungsform des Formträgerteils T1 von Fig. 1, der einen Stapelaufbau oder Schichtaufbau aus mehreren identischen Komponenten gemäß Fig. 5 aufweist. Der Verstärkungsbügel 1 mit der Außenwand 9 aus einem Material X mit zumindest hoher Festigkeit, z. B. gemäß Fig. 6 aus in einer Kunststoffmatrix 28 eingebetteten Kohlenstofffasern 29, wird zunächst in noch verformbarem Zustand als Ring bereitgestellt, der erst in die gekrümmte Form des Verstärkungsbügels 1 bzw. der Au-βenwand 9 (Fig. 6) gebracht, und dann unter Einfluss von Temperatur und Druck gebacken wird. Beispielsweise eignet sich hierfür Kohlenstofffasergewebe mit Schuss- und Kettfäden und einer Kunststoffvorimprägnierung (ein sogenannter Prepreg), das in unterschiedlichen Spezifikationen handelsüblich ist. Die in Fig. 6 verformte Außenwand 9 wird dann gebacken, so dass sie formstabil und hochfest wird, und den Innenraum 10 definiert. Alternativ könnte die Außenwand 9 auch aus hochfestem Stahl 27 hergestellt sein. Die Armierungsbuchsen 5, 8 werden (Fig. 5) eingeklebt oder eingepresst, ehe der Abstandshalter 2 in den Innenraum 10 eingesetzt wird, beispielsweise aus faserverstärktem Kunststoff oder unverstärktem Kunststoff in einem Spritzgussverfahren. Alternativ könnte der Abstandshalter 2 aus einem Leichtmetall wie Aluminium oder einer Aluminiumlegierung spanabhebend vorbereitet oder gusstechnisch gefertigt, beispielsweise in den Innenraum 10 eingegossen, oder eingepresst und eingeklebt oder sogar verschraubt werden.

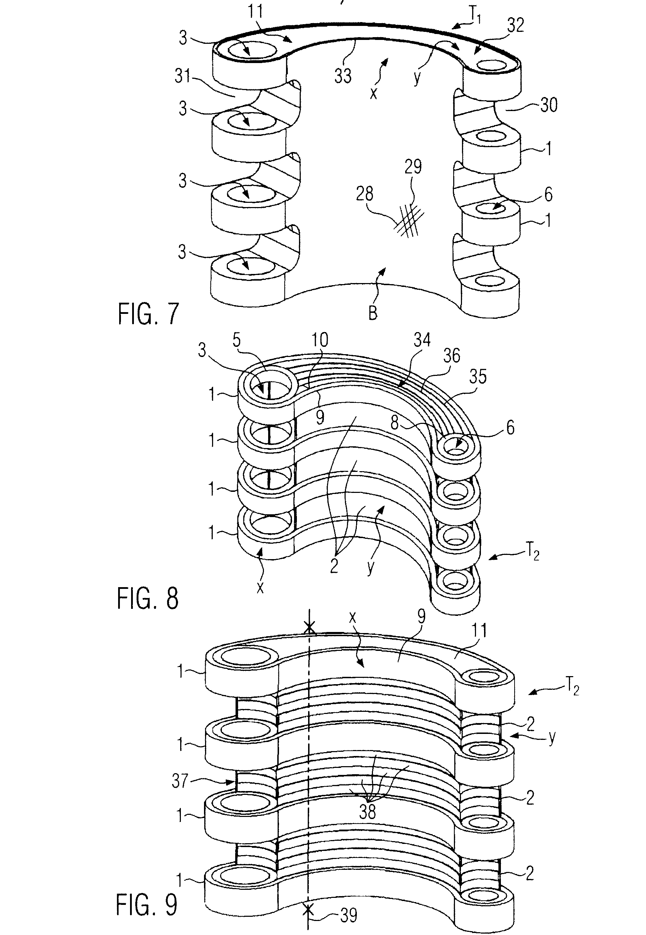

Fig. 7 verdeutlicht eine weitere Ausführungsform des Formträgerteils T1. In dieser Ausführungsform ist in der Verbundschale ein Kern 32 aus wenigstens einem Material Y mit geringer Festigkeit und/oder Dichte und/oder spezifischem Gewicht enthalten, der zumindest bereichsweise oder vollständig mit einer Umhüllung 33 aus einem Material X mit hoher Festigkeit, zweckmäßig mit Kohlenstofffasern verstärktem Kunststoffmaterial, wie einem Gewebe oder mehreren Gewebelagen, umwickelt ist, wobei die Umhüllung 33 die Außenform des Formträgerteils T1 abbildet und ein Kraftübertragungs- oder/und Krafteinleitungselement ist. Die in der Kunststoffmatrix 28 eingebetteten Kohlenstofffasern 29 (Schuss- und Kettfäden eines Gewebes) sind an der inneren Begrenzung B angedeutet, die zur Montage des nicht gezeigten Formteils dient. In der gezeigten Ausführungsform sind die Endflächen 11 der Verbundschale nicht von der Umhüllung 33 abgedeckt, wie gegebenenfalls auch Zwischenräume 30 und 31 zwischen den hier vollständig integrierten Verstärkungsbügeln 1 bzw. den Widerlagern 3, 6. Es könnten aber auch die Zwischenräume 31 und die Endflächen 11 mit der Umhüllung 33 abgedeckt sein. Der Kern 32 könnte faserverstärkten Kunststoff aufweisen oder aus einem Metall bestehen, beispielsweise einem Leichtmetall, und gusstechnisch oder spanabhebend vorgeformt sein. Die Widerlager 3, 6 können mit Armierungsbuchsen (nicht gezeigt) ausgekleidet werden.

Fig. 8 verdeutlicht eine Ausführungsform des Formträgerteils T1 ähnlich dem der Fig. 1, jedoch mit einem Laminataufbau der Verstärkungsbügel 1, die über die Abstandshalter 2 aus einem Material Y zumindest mit geringer Festigkeit und/oder Dichte und/oder spezifischem Gewicht in der Verbundschale verbunden sind. Der Laminataufbau ist bei 34 angedeutet und umfasst beispielsweise innerhalb der Innenwand 9 aus Material X hoher Festigkeit mehrere Laminatlagen 35, 36, die beispielsweise aus spritzgegossenem Kunststoff, faserverstärktem Kunststoff oder einem mit Kohlenstofffasern verstärkten Kunststoffmaterial geringerer Güte als das beispielsweise der Außenwand 9 ausgebildet und miteinander zumindest stoffschlüssig verbunden sind. Der Laminataufbau 34 im Innenraum 10 der Außenwand 9 fixiert auch die Armierungsbuchsen 5, 8 der Widerlager 3, 6.

Fig. 9 verdeutlicht eine Ausführungsform des Formträgerteils T2 mit einem Schichtaufbau der Abstandshalter 2, wobei der Schichtaufbau aus miteinander verbundenen Schichten 38 gegebenenfalls durch sämtliche Verstärkungsbügel 1 durchgeht, oder die gemäß Fig. 8 oder Fig. 5 oder Fig. 2 ausgebildeten Verstärkungsbügel 1 miteinander verbindet. Jeder Schichtaufbau 35 könnte ein Block 37 sein, oder, wie erwähnt, ein durchgehender Block 37. Die Schichten des Schichtaufbaus 38 sind beispielsweise aus mit Kohlenstofffasern verstärktem Kunststoffmaterial gebildet und miteinander verklebt. Alternativ könnten die Schichten des Schichtaufbaus 38 ausgeschnittene oder ausgestanzte Vorformteile aus Leichtmetallblech sein, die miteinander verschweißt oder verklebt oder, wie bei 39 angedeutet, verschraubt sind. Falls die Schichten des Schichtaufbaus 38 aus mit Kohlenstofffasern verstärkten Kunststoffmaterial (Gewebelagen) gebildet werden, könnten die Faserorientierungen unter den Schichten variieren, um eine Optimierung der Verteilung der Druck-, Zug- und Torsionskräfte in dem Formträgerteil zu erzielen. Die Orientierung der Fasern kann unidirektional (horizontal und/oder vertikal geschichtet) gewählt werden, mit unterschiedlichen Winkeln der Fasern relativ zueinander, z. B. rechtwinklig oder unter Winkeln von 30°, kann jedoch auch bidirektional variiert werden, d. h., dass die beispielsweise Kett- und Schussfasern in dem Gewebe unter unterschiedlichen Winkeln zueinander verlaufen. Im Schichtaufbau können Gewebematten immer gleicher Textur, d. h. gleicher Faseranordnung, verwendet werden, oder Gewebematten unterschiedlicher Texturen, d. h. mit unterschiedlichen Orientierungen der Fasern.

Dieser Schichtaufbau 38 kann auch mit Gewebematten aus glasfaserverstärktem Kunststoffmaterial, d. h. einem Material Y mit geringer Festigkeit, realisiert sein, da die Verstärkungsbügel 1 die überwiegenden Kraftübertragungs- und Krafteinleitungselemente der Verbundschale des Formträgerteils T2 sind.

Grundsätzlich sind Ausführungsformen möglich, bei denen zwei Materialien X, Y mit unterschiedlichen Festigkeiten und/oder Dichten und/oder spezifischen Gewichten eingesetzt werden. Dies schließt jedoch nicht aus, mehr als nur zwei Materialien X, Y mit unterschiedlichen Festigkeiten und/oder Dichten und/oder spezifischen Gewichten kombiniert einzusetzen. Unabhängig von dem realisierten Konzept wird durch den einstückigen Verbundbauteil, der den Formträgerteil T1, T2 konstituiert, angestrebt, eine optimierte Belastungsorientierung für Kräfte und eine Gewichtsoptimierung zu erzielen, damit der Formträgerteil bei geringem Gewicht, und gegebenenfalls kompakten Abmessungen, die erforderlichen Funktionen der Kraftübertragung- oder Krafteinleitung optimal erfüllt.

## Patentansprüche

1. Blasform (F), insbesondere zum Herstellen blas- oder streckblasgeformter Behälter, mit durch einen kraftübertragenden Betätigungsmechanismus (M) relativ zueinander beweglichen Formträgerteilen (T1, T2) zum Öffnen, Schließen und Verriegeln von einen Formhohlraum definierenden, an den Formträgerteilen (T1, T2) montierten Formteilen (21), **dadurch gekennzeichnet, dass** jeder Formträgerteil (T1, T2) ein einstückiger Verbundbauteil mit Bereichen aus unterschiedlichen Materialien (X, Y) ist, und dass im Formträgerteil (T1, T2) zumindest ein erster Bereich aus einem Material (X) überwiegend ein Kraftübertragungselement und zumindest ein zweiter Bereich aus einem anderen Material (Y) überwiegend ein Füll- oder Umhüll- oder Abstandshalter-Element sind.

2. Blasform nach Anspruch 1, **dadurch gekennzeichnet, dass** zumindest die Dichten und/oder Festigkeiten und/oder spezifischen Gewichte der Materialien (X, Y) voneinander verschieden sind.

3. Blasform nach Anspruch 1, **dadurch gekennzeichnet, dass** die Materialien (X, Y) aus einer Gruppe ausgewählt sind, die zumindest umfasst: Leichtmetall-Gussmaterial, Leichtmetall, Stahl-Gussmaterial, Stahl, mit Kohlenstofffasern und/oder Glasfasern verstärktes Kunststoffmaterial, unverstärkten Kunststoff, Keramik.

4. Blasform nach Anspruch 1, **dadurch gekennzeichnet, dass** die Bereiche durch Eingie-βen und/oder Kleben und/oder Verschrauben und/oder Verschweißen und/oder Verpressen und/oder Formschluss und/oder Kraftschluss und/oder Spritzgießen und/oder Einbacken und/oder Verschrauben und/oder Umwickeln miteinander verbunden sind.

5. Blasform nach wenigstens einem der vorhergehenden Ansprüche, **dadurch gekennzeichnet, dass** im Formträgerteil (T1, T2) wenigstens ein Bereich aus einem Material (X) mit hoher Festigkeit entweder als innere Verstärkung zumindest Bereichsweise innen in wenigstens einem die Form des Formträgerteils (T1, T2) abbildenden, äußeren Bereich aus einem Material (Y) mit geringerer Festigkeit und/oder Dichte und/oder spezifischem Gewicht, oder als die Form des Formträgerteils (T1, T2) abbildende äußere Verstärkung zumindest bereichsweise außen um wenigstens einen inneren Füllbereich aus einem Material (Y) mit geringerer Festigkeit und/oder Dichte und/oder spezifischem Gewicht angeordnet ist.

6. Blasform nach Anspruch 5, **dadurch gekennzeichnet, dass** entweder der die Form des Formträgerteils (T1, T2) abbildende äußere Bereich aus einem Material (Y) mit geringerer Festigkeit und/oder Dichte und/oder spezifischem Gewicht oder die die Form des Formträgerteils (T1, T2) abbildende äußere Verstärkung um die als vorgefertigtes oder gegossenes Inlay (15) ausgebildete innere Verstärkung bzw. den als vorgefertigtes oder gegossenes Inlay ausgebildeten inneren Füllbereich gegossen ist, und dass, vorzugsweise, das Inlay (15) mit dem Form- und Kraftschluss zwischen den gießtechnisch verbundenen Bereichen verstärkenden Durchbrüchen und/oder Hohlräumen (24) ausgebildet ist.

7. Blasform nach wenigstens einem der vorhergehenden Ansprüche, **dadurch gekennzeichnet, dass** im Formträger (T1, T2) die Bereiche zumindest aus dem Material (Y) mit geringerer Festigkeit und/oder Dichte und/oder spezifischem Gewicht in einem Schicht- und/oder Laminat- und/oder Sandwich-Aufbau angeordnet sind, in welchem, vorzugsweise, unter Verwendung von faserverstärktem, insbesondere mit Kohlenstofffasern verstärktem, Kunststoffmaterial gleiche oder variierende Schichtstärken und/oder gleiche oder variierende Faserorientierungen unter den Schichten vorgesehen sind.

8. Blasform nach wenigstens einem der vorangehenden Ansprüche, **dadurch gekennzeichnet, dass** in einem Bereich aus einem Material (X) hoher Festigkeit zumindest ein Kraftübertragungs- oder Krafteinleitungs-Merkmal vorgesehen ist, wie ein Widerlager (3, 6) beispielsweise in Form eines Lagerungsauges, gegebenenfalls mit einer Armierungsbuchse (5, 8), eine Anschlagfläche, ein Anbau- und/oder Einbauteil, vorzugsweise zum Angriff des Betätigungsmechanismus (M), und dass das Kraftübertragungs-Krafteinleitungs-Merkmal am Formträgerteil (T1, T2) von außen zugänglich platziert ist.

9. Blasform nach wenigstens einem der vorangehenden Ansprüche, **dadurch gekennzeichnet, dass** der Formträgerteil (T1, T2) eine gekrümmte Verbundschale ist, die eine innenseitige Begrenzung (B) zur Montage eines Formteils (21), eine außenseitige Begrenzung (12) gegebenenfalls mit Kraftübertragungs- und/oder Krafteinleitungs-Merkmalen, obere und untere, die Krümmung der Verbundschale abbildenden Endflächen (11), und miteinander jeweils fluchtende, voneinander durch Zwischenräume (39, 31) separierte Widerlager (3, 6), vorzugsweise in Form von gebohrten oder geformten Lagerungsaugen (4, 7), gegebenenfalls ausgekleidet mit metallischen Armierungsbuchsen (5, 8), an beiden die Endflächen (11) verbindenden Begrenzungsrändern (13, 14) aufweist, und dass die Widerlager (3, 6) und die Kraftübertragungs- und/oder Krafteinleitungs-Merkmale in bzw. an dem jeweiligen Kraftübertragungselement angeordnet sind.

10. Blasform nach Anspruch 9, **dadurch gekennzeichnet, dass** in der innenseitigen Begrenzung (B), die, vorzugsweise, zur schwimmenden Lagerung des Formteils (21) ausgebildet ist, wenigstens eine Vertiefung (20) zum Einbringen eines Kompensationselements geformt ist.

11. Blasform nach Anspruch 9, **dadurch gekennzeichnet, dass** der Formträgerteil (T1, T2) mehrere, zueinander parallele, beabstandete Verstärkungsbügel (1) aufweist, die über eine Formteil-Montierschale (19) miteinander verbunden sind, und dass jeder Verstärkungsbügel (1) in einem außenliegenden Hüllbereich aus einem Material (Y) mit geringerer Festigkeit und/oder Dichte und/oder spezifischem Gewicht wenigstens ein eingebettetes, versteifendes und kraftübertragendes, bügelförmiges Inlay (15) aus wenigstens einem Material (X) mit höherer Festigkeit und/oder Dichte und/oder spezifischem Gewicht mit den Widerlagern (3, 6) aufweist, wobei die Widerlager (3, 6) in dem Hüllbereich freigelegt sind.

12. Blasform nach Anspruch 9, **dadurch gekennzeichnet, dass** der Formträgerteil (T1, T2) mehrere, zueinander parallele, beabstandete Verstärkungsbügel (1) aufweist, die über Abstandshalter (2) aus einem Material (Y) mit geringerer Festigkeit und/oder Dichte und/oder spezifischem Gewicht miteinander verbunden sind, und dass jeder Verstärkungsbügel (1) eine umlaufende Außenwand (9) aus einem Material (X) mit hoher Festigkeit und eine Füllung innerhalb der umlaufenden Außenwand (9), vorzugsweise als Teil des oder der Abstandshalter (2), aus einem Material (Y) mit geringerer Festigkeit und/oder Dichte und/oder spezifischem Gewicht enthält, wobei, vorzugsweise, die Außenwand (9) aus mit Kohlenstofffasern verstärktem Kunststoffgewebe und die Füllung aus faserverstärktem Kunststoff oder spritzgegossenem, duroplastischem oder thermoplastischem Kunststoff bestehen.

13. Blasform nach Anspruch 12, **dadurch gekennzeichnet, dass** jeder Verstärkungsbügel (1) in der Außenwand (9) aus Stahl und/oder aus mit Kohlenstofffasern verstärktem Kunststoff besteht und innerhalb der Außenwand (9) ein Laminat (34) aus Materialien (Y) mit geringerer Festigkeit und/oder Dichte und/oder spezifischem Gewicht aufweist, vorzugsweise in Laminat (34) aus Kunststoffschichten, vorzugsweise spritzgegossenen duroplastischen oder thermoplastischen Kunststoffen und/oder glasfaserverstärkten und/oder hat Kohlenstofffasern verstärkten Kunststoffschichten.

14. Blasform nach Anspruch 12, **dadurch gekennzeichnet, dass** die Abstandshalter (2), vorzugsweise in Form eines durch alle Verstärkungsbügel (1) durchgehenden Strukturbereichs, aus flächig aufeinander geschichteten, stoff- oder form- und kraft-schlüssig verbundenen Lagen (38) gleicher oder ungleicher Dicken aus wenigstens einem Material (Y) mit geringerer Festigkeit und/oder Dichte und/oder spezifischem Gewicht hergestellt sind, wobei, vorzugsweise, die Lagen (38) entweder aus miteinander verklebten, faserverstärkten oder mit Kohlenstofffasern (29) verstärkten Geweben mit einer Kunststoffmatrix (29) bestehen und in zumindest einigen Lagen (38) voneinander verschiedene Faserorientierungen vorgesehen sind, oder die Lagen (38) aus Leichtmetall-Blechen geschnitten oder gestanzt und miteinander verschweißt oder verschraubt sind.

15. Blasform nach Anspruch 9, **dadurch gekennzeichnet, dass** der Formträgerteil (T1, T2) einen Kern (32) aus einem Material (Y) mit geringerer Festigkeit und/oder Dichte und/oder spezifischem Gewicht, vorzugsweise aus faserverstärktem Kunststoff oder einem Metall wie einem Leichtmetall, aufweist, und dass der Kern (32) außenseitig mit mit Kohlenstofffasern (29) in einer Kunststoffmatrix (28) aufweisendem Gewebe (33) umwickelt und stoffschlüssig damit verbunden ist.
